# EUROPÄISCHE PATENTSCHRIFT

(11) **EP 2 671 480 B1**
(45) Veröffentlichungstag und Bekanntmachung des Hinweises auf die Patenterteilung: **01.08.2018**
(21) Anmeldenummer: 13401049.5
(22) Anmeldetag: 07.05.2013
(51) Int. Cl.: A47J 31/60

(54) **Entkalkungsvorrichtung, Getränkeautomat mit einer derartigen Entkalkungsvorrichtung sowie Verfahren zur Anwendung einer Entkalkungsvorrichtung in einem Getränkeautomat**
Descaling device, beverage machine with such a descaling device and method for using a descaling device in a beverage machine
Dispositif de détartrage, automate pour boissons doté d'un tel dispositif de détartrage et procédé d'utilisation d'un dispositif de détartrage dans un automate pour boissons

(30) Priorität: 05.06.2012 DE 102012104860
(43) Veröffentlichungstag der Anmeldung: 11.12.2013
(60) Teilanmeldung: 18171123.5
(73) Patentinhaber: Miele & Cie. KG, 33332 Gütersloh (DE)
(72) Erfinder: Last, Mario, 33739 Bielefeld (DE); Tembaak, Jutta, 49492 Westerkappeln (DE)

(56) Entgegenhaltungen:
- DE-A1- 2 820 818
- DE-A1- 4 422 143
- DE-U- 6 752 882
- FR-A1- 2 709 682

## Beschreibung

Die Erfindung betrifft eine Entkalkungsvorrichtung, einen Getränkeautomaten mit einer derartigen Entkalkungsvorrichtung sowie ein Verfahren zur Anwendung einer Entkalkungsvorrichtung in einem Getränkeautomat.

Wasser weist regional sehr unterschiedliche chemische Zusammensetzungen auf. Dabei stellen insbesondere Calciumcarbonat und dessen chemische Verbindungen ein besonderes Problem dar, weil dieser gemeinhin als "Kalk" bezeichnete Stoff sich in Wasser führenden Leitungen und Aggregaten absetzt und diese über einen längeren Zeitraum betrachtet entweder außer Betrieb setzt oder eine ungehinderte Fluidströmung zumindest in entscheidendem Maße behindert. Je nach Kalkgehalt des Wassers wird dieses in unterschiedliche Härtegrade unterteilt. So unterscheidet man eher weiches Wasser, das einen geringen Kalkanteil aufweist, von hartem Wasser, mit einem hohen Kalkgehalt. Diese Härtegrade des Wassers bestimmen beispielsweise auch die benötigte Waschmittelmenge beim Waschen von Wäsche oder die Häufigkeit, mit der Wasser verarbeitende oder Wasser führende Leitungen oder Armaturen entkalkt werden müssen. Bekannt und bereits im Einsatz sind hierfür Entkalkungsmittel, die auf Grund einer chemischen Reaktion in der Lage sind, den Kalk zu lösen. Da dieser Vorgang in Abhängigkeit von der bereits erwähnten Wasserhärte mehr oder weniger regelmäßig durchgeführt werden muss, sind verschiedene Ansätze und Lösungen bekannt, einen gewissen Automatismus der Entkalkung herbeizuführen. Das Problem der Entkalkung stellt sich allerdings nicht nur bei Wasser, sondern generell bei Fluiden, also auch bei gasförmigen Stoffen auf Wasserbasis. Fluide können im strömungstechnischen Sinne nämlich sowohl Gase, als auch Flüssigkeiten sein. Somit sind Dampf führende Leitungen ebenso betroffen, wie Flüssigkeitsleitungen.

Aus der EP 2 265 158 B1 geht beispielsweise eine Entkalkungsvorrichtung zur Entkalkung eines Strömungsleitungssystems für Fluide am Beispiel eines Getränkeautomaten hervor, bei dem ein über einen Wassereinlass mit Wasser beaufschlagbarer Vorratsbehälter vorhanden ist, in dem sich ein wasserlösliches Entkalkungsmittel befindet. Ein Gemischauslass des Vorratsbehälters sorgt dafür, dass das gelöste Entkalkungsmittel in das Strömungsleitungssystem abgeführt wird und dort seine gewünschte Wirkung erzielt. Hierbei wird das Prinzip der Durchlaufströmung genutzt. Dies bedeutet, das Wasser durchläuft vom Wassereinlass zum Gemisch Auslass die eingebrachte Dosis Entkalkungsmittel, löst dieses und wird als Gemisch am Gemischauslass in das Strömungsleitungssystem abgeführt. Dabei sorgt eine Steuereinheit für den eigentlichen Ablauf der Entkalkung. Nachteilig ist bei dieser Lösung allerdings, dass der Anwender vor dem Entkalkungsvorgang zunächst je eine vorgeschriebene Dosis Entkalkungsmittel sowie Wasser in den Vorratsbehälter einfüllen muss, um erst anschließend die Entkalkung durchführen zu können. Die Steuerungseinheit hat hierbei nur die Aufgabe, den eigentlichen Entkalkungsprozess, das heißt, die Zirkulation des gelösten Entkalkungsmittels im Strömungsleitungssystem, zu steuern. Mit anderen Worten wurde hier lediglich eine Teilautomatisierung erreicht. Darüber hinaus hat sich die beschriebene Durchlaufströmung als nachteilig herausgestellt, weil nicht immer sichergestellt ist, dass das in den Vorratsbehälter eingefüllte Wasser auch tatsächlich die gesamte Dosis Entkalkungsmittel löst. Die chemische Reaktion der Lösung ist nämlich sehr stark temperaturabhängig, sodass Schwankungen sich hier nachteilig auswirken können. Die Folgen eines nicht vollständig gelösten Entkalkungsmittels sind jedoch gravierend, da die Wirkung nicht in erforderlichem Maße einsetzt.

Die DE 28 20 818 A1 offenbart ein Wasserenthärtungssystem für einen Geschirrspüler, welches einen Mischbehälter umfasst, in dem Salz vorgehalten wird, das mit Wasser beaufschlagt zur Bildung einer Salzlösung wird, um Harzgranulat zur Wasserenthärtung zu regenerieren. Das Salz ist hierbei in einem Geflechtbehälter in den Mischbehälter eingesetzt, um eine möglichst gute Auflösung und Vermischung im Wasser zu erreichen.

Die FR 2 709 682 A1 offenbart ein Wasseraufbereitungssystem für Wasser in einem Getränkeautomaten, das für de Getränkezubereitung bestimmt ist. Das System umfasst einen Mischbehälter, in den das Wasser aus dem Vorratsbehälter eingelassen wird bzw. mit dem Vorratsbehälter verbunden ist. Im Behälter stellt sich das Wasser für die Getränkezubereitung auf einen vordefinierten Härtegrad ein und wird über einen Behälterauslass der Brüheinheit zugeführt.

Der Erfindung stellt sich somit das Problem, eine Entkalkungsvorrichtung bereitzustellen, die einen einfachen Aufbau aufweist und eine optimale Dosierung des gelösten Entkalkungsmittels ermöglicht. Darüber hinaus ist ein Getränkeautomat mit einer derartigen Entkalkungsvorrichtung auszustatten sowie ein Verfahren zur Anwendung einer Entkalkungsvorrichtung in einem Getränkeautomat anzugeben.

Erfindungsgemäß wird dieses Problem durch eine Entkalkungsvorrichtung mit den Merkmalen des unabhängigen Anspruchs 1, einen Getränkeautomat nach dem Anspruch 7 sowie durch ein Verfahren zur Anwendung einer Entkalkungsvorrichtung in einem Getränkeautomat nach Anspruch 11 gelöst.

Vorteilhafte Ausgestaltungen und Weiterbildungen der Erfindung ergeben sich aus den sich jeweils abhängigen Ansprüchen.

Eine Entkalkungsvorrichtung zur Entkalkung eines Strömungsleitungssystems für Fluide, umfassend einen über einen Wassereinlass mit Wasser beaufschlagbaren Vorratsbehälter mit einem darin enthaltenen wasserlöslichen Entkalkungsmittel, dessen Lösung über einen Gemischauslass des Vorratsbehälters abführbar ist, wurde erfindungsgemäß dahingehend weitergebildet, dass in dem mit Wasser aufgefüllten Vorratsbehälter eine sich ausbildende gesättigte Lösung des ursprünglich pulverförmigen oder pastösen Entkalkungsmittels gegeben ist.

Ein maßgeblicher Vorteil der Erfindung besteht darin, dass der Vorratsbehälter nicht nur für einen einmaligen Gebrauch dient, sondern der Entkalkungsvorgang über einen langen Zeitraum erfolgen kann. Dies rührt daher, dass stets nur ein Teil des im Vorratsbehälter enthaltenen Entkalkungsmittels durch das frisch zugeführte Wasser in Lösung übergeht, weil innerhalb des Vorratsbehälters ja bereits eine gesättigte Lösung gegeben ist und sich ein chemisches Gleichgewicht eingestellt hat. Die genaue Dosierbarkeit hat jedoch auch den Vorzug, dass die benötigte Menge gelösten Entkalkungsmittels, die dem Strömungsleitungssystems für Fluide zugeführt wird, exakt dem Härtegrad des lokal gegebenen Wassers angepasst werden kann. Ein besonders sparsamer Umgang mit den vorhandenen Ressourcen ist daher selbstverständlich möglich, was einen wesentlichen Beitrag zum Umweltschutz mit sich bringt. Ein weiterer, nennenswerter erfindungsgemäßer Vorteil besteht auch darin, dass eine aufwendige Dosierung des Entkalkungsmittels, wie sie beispielsweise mittels einer Dosierpumpe bei bereits bekannten Lösungen erfolgt, entfallen kann. Damit werden verschiedene Zubehörteile nicht mehr benötigt und es wird insgesamt wertvoller Bauraum eingespart, sodass die Kosten für eine derartige Entkalkungsvorrichtung entscheidend gesenkt werden können, was letztlich einen wirtschaftlichen Vorteil darstellt.
Für die Ausführbarkeit der Erfindung ist es dabei unerheblich, welche Konsistenz das Entkalkungsmittel hat. Es kann fest, also beispielsweise als gepresstes Pulver, pulverförmig im eigentlichen Sinne oder eher pastös sein. Der Vorratsbehälter erfordert durch die damit gegebene hohe Konzentration des Entkalkungsmittels insgesamt eine geringe Baugröße, so dass wertvoller Bauraum eingespart werden kann.

Von besonderer Bedeutung ist auch die spezielle Anordnung von Wassereinlass und Gemischauslass relativ zueinander, wie dies in einer ersten Ausgestaltung der Erfindung wiedergegeben ist, die dahingehend zu verstehen ist, dass der Gemischauslass des Vorratsbehälters mit einem Höhenversatz oberhalb des Wassereinlasses am Vorratsbehälter angeordnet ist und dass durch die damit gegebene Strömungsführung innerhalb des Vorratsbehälters eine sich ausbildende gesättigte Lösung des ursprünglich pulverförmigen oder pastösen Entkalkungsmittels gegeben ist.
So geht dieser Erfindungsgedanke allgemein dahin, eine schwerkraftkonträre Fluidströmung durch ein nicht flüssiges Entkalkungsmittel zu schaffen. Mit anderen Worten wird der Wassereinlass stets unterhalb des Gemischauslasses vorgesehen, was zur Folge hat, dass das sich am Boden des Vorratsbehälters absetzende Entkalkungsmittel direkt von dem über den Wassereinlass einströmenden Wasser durchströmt, verwirbelt und in eine turbulente Strömung versetzt wird. Dies kommt der verbesserten Auflösung des Entkalkungsmittels zugute. Nachdem die gesättigte Lösung innerhalb des Vorratsbehälters gebildet wurde, setzt sich der nicht gelöste Teil des Entkalkungsmittels wieder am Boden des Vorratsbehälters ab und kann beim nächsten Wassereinlass erneut durchströmt und dabei verwirbelt beziehungsweise zum Teil gelöst werden.

Eine weiterführende Lösung der Erfindung geht davon aus, dass der Vorratsbehälter über einen bodenseitigen Wassereinlass und einen oberhalb des Wassereinlasses angeordneten Gemischauslass verfügt, denen jeweils mindestens ein Dosierventil zugeordnet ist. Der Wassereinlass kann dabei sowohl seitlich im Bodenbereich in den Vorratsbehälter eintreten, als auch von der Unterseite her, also vertikal in den Boden münden. Durch diese spezielle Anordnung des Wassereinlasses wird das in dem Vorratsbehälter enthaltene Entkalkungsmittel in der zuvor beschriebenen Weise mittels einer turbulenten Strömung verwirbelt und vermischt sich dadurch optimal mit dem zugeführten Wasser, so dass der Übergang in eine Lösung sehr gleichmäßig und homogen erfolgt. Die hohe Qualität der Vermischung ist maßgeblich für eine bestmögliche Durchführung des Entkalkungsvorganges. Die Dosierventile dienen der Regulierung des Ein- und Auslasses. Somit kann sichergestellt werden, dass genau die Menge des aufbereiteten Gemischs des Entkalkungsmittels aus dem Vorratsbehälter abgeführt wird, die in Form frischen Wassers über den Wassereinlass nachgefüllt wird. Innerhalb des Vorratsbehälters bleibt auf diese Weise das chemische Gleichgewicht stets erhalten. Genutzt wird hierbei das Prinzip der Volumenverdrängung.

Grundsätzlich wird bei der erfindungsgemäßen Entkalkungsvorrichtung davon ausgegangen, dass der Vorratsbehälter in der Entkalkungsvorrichtung verbleibt und nicht ausgetauscht werden muss, wobei ein Austausch ohne weiteres erfolgen könnte. Die einfachste Lösung ist jedoch, den Vorratsbehälter mit einer verschließbaren Öffnung zum Nachfüllen verbrauchten Entkalkungsmittels auszustatten, was einem weiterführenden Vorschlag der Erfindung entspricht. Mit anderen Worten kann es sich bei der Öffnung im einfachsten Fall um einen verschließbaren Deckel handeln. Eine Befüllung mit pulverförmigem Entkalkungsmittel kann dabei bis zu einem Jahr oder länger ausreichen, um ein Strömungsleitungssystem kalkfrei zu halten.

Da das Entkalkungsmittel bevorzugt pulverförmig zur Anwendung kommt, kann es im Rahmen einer vorteilhaften Portionierung in einer Tablettenform, also beispielsweise auch gepresst zur Verfügung gestellt werden. Das Entkalkungsmittel bildet dabei im Gemisch mit Wasser eine Säure, weil sich Säure in besonders vorteilhafter Weise zum Auflösen von Calziumcarbonat oder "Kalk" eignet. Je intensiver die Säure ist, umso effektiver erfolgt die Befreiung des Strömungsleitungssystems von Kalkrückständen. Ein pulverförmiges Entkalkungsmittel hat jedoch darüber hinaus weitere Vorteile. Zunächst kann der Vorratsbehälter im Vergleich zu flüssigen Entkalkungsmitteln oder Kationentauschern verhältnismäßig klein ausgelegt werden. Darüber hinaus besteht bei flüssigen Entkalkungsmitteln ein Exportproblem, das aus dem Verbot der grenzüberschreitenden Überführung von Flüssigkeiten herrührt. Hier sind zumeist aufwändige Zulassungsverfahren erforderlich, um grenzüberschreitend Exporte vornehmen zu können. Ein anderer Vorteil pulverförmiger Entkalkungsmittel ist auch darin zu sehen, dass Pulver auch unter extremen thermischen Bedingungen keine Aggregatzustandänderungen erfährt. So sind Lager- oder Transportbedingungen im Bereich von -20 °C bis +70 °C keine Seltenheit und können ausschließlich von pulverförmigen Entkalkungsmitteln problemlos überstanden werden, ohne dass Qualitätseinbußen zu befürchten sind. Flüssige Entkalkungsmittel bergen zudem das Risiko, dass bei einer Beschädigung der Verpackung das Entkalkungsmittel ausläuft. Die dadurch hervorgerufenen Schäden sind durch pulverförmige Entkalkungsmittel vermeidbar.

Da es sich bei einer Säure in Abhängigkeit von ihrer Konzentration möglicherweise um ein sehr aggressives Medium handelt, spielt der Schutz der Gesundheit und der Umwelt eine ganz besondere Rolle. Aus diesem Grund ist nicht jede Säure uneingeschränkt für die erfindungsgemäßen Zwecke einsetzbar. Schließlich muss auch daran gedacht werden, das mit einer derartigen Entkalkungsvorrichtung unter Umständen Laien umgehen. Hier müssen Unfallgefahren grundsätzlichen ausgeschlossen werden. Ein weiterer erfindungsgemäßer Vorschlag geht deshalb dahin, dass das Entkalkungsmittel Zitronensäure, Essigsäure oder eine andere, biologisch abbaubare Säure ist. Mit dieser Lösung treten bei der Entsorgung der Endprodukte des Entkalkungsvorganges keine Probleme mehr auf. Die Säure ist zudem einfach zu handhaben und ruft selbst bei einer gegebenenfalls unsachgemäßen Anwendung keine extrem folgenschweren Schädigungen hervor.

Ein erfindungsgemäßer Getränkeautomat weist ein Strömungsleitungssystem für Fluide mit mindestens einem Wasser enthaltenden Wasserbehälter oder Wasseranschluss, wenigstens einer Pumpe, mindestens einem Ventil und wenigstens einer Entnahmeeinrichtung auf, wobei die Entkalkungsvorrichtung zur Entkalkung des Strömungsleitungssystems zwischen Wasserbehälter und Entnahmeeinrichtung angeordnet ist.
Unter einer "Entnahmeeinrichtung" ist im Sinne der Erfindung beispielsweise bei einem als Kaffeeautomat ausgeführten Getränkeautomaten eine Dampfdüse, eine Ausgabestelle für Heißwasser oder zum Beispiel die Kaffeeausgabedüse zu verstehen. Ebenso kann es sich hier bei anderen Getränkeautomaten ganz allgemein um die Zapfstelle des Getränks handeln.

Die Pumpe dient dabei der Förderung der Flüssigkeiten und/oder Gase innerhalb des Strömungsleitungssystems. Als Quelle für das Frischwasser, welches für die Bereitung des Getränkes und/oder der Durchführung der Entkalkung dient, kann in einfacher Weise ein Wasserbehälter zum Einsatz kommen. Andere Lösungen weisen einen festen Wasseranschluss auf, was hier explizit nicht ausgeschlossen wird und nachfolgend synonym zu verstehen ist.
Die Anordnung der Entkalkungsvorrichtung zwischen Wasserbehälter und Entnahmeeinrichtung hat dabei den Vorteil, dass das Strömungsleitungssystem nahezu vollständig entkalkt werden kann. Aus diesem Grund sollte der Gemischauslass des Vorratsbehälters in Strömungsrichtung betrachtet möglichst nahe hinter dem Wasserbehälter angeordnet sein. Allerdings ist bei der Getränkezubereitung unbedingt zu vermeiden, dass Entkalkungsmittel in das Strömungsleitungssystem eintritt. Daher wird bei dieser Lösung mindestens ein steuerbares Ventil zum Einsatz kommen, um den Entkalkungszweig des Strömungsleitungssystems von dem Teil der ausschließlich für die Getränkeaufbereitung dient, zu trennen. Mit anderen Worten wird durch das Ventil gesteuert, dass das Entkalkungsmittel nur dann in das Strömungsleitungssystem eintritt, wenn der Getränkeautomat außer Betrieb ist, das heißt, nicht für die Zubereitung von Getränken genutzt wird.

Neben der zuvor bereits beschriebenen Möglichkeit der Anordnung der Entkalkungsvorrichtung in einem erfindungsgemäßen Getränkeautomat wird alternativ hierzu vorgeschlagen, dass die Entkalkungsvorrichtung zur Entkalkung des Strömungsleitungssystems als Bypass in die Wasserleitung des Wasserbehälters integriert ist.
Die Bypass-Lösung hat den entscheidenden Vorteil, dass hiermit sehr einfach und zuverlässig vermieden werden kann, dass Rückstände des Entkalkungsmittels in den Kreislauf des Strömungsleitungssystems gelangen, wenn dieses zur Bereitung eines Getränkes genutzt wird.

Es versteht sich von selbst, dass nach einer erfolgten Entkalkung und/oder Reinigung des Strömungsleitungssystems abschließend stets eine gründliche Spülung mit frischem Wasser durchgeführt werden muss, um sämtliche Rückstände des Entkalkungsvorganges beziehungsweise des Reinigungsvorganges zu beseitigen!

In Abhängigkeit vom Härtegrad des verwendeten Wassers muss auch die Konzentration des Entkalkungsmittels eingestellt werden. Bei Verwendung der eingangs genannten Säure können bei hartem Wasser 30-40 mmol Säure je Liter Wasser erforderlich werden. Bei weichem Wasser sind durchaus 20 mmol je Liter Wasser ausreichend, sodass einfach weniger Entkalkungsmittel in das Fluid gegeben wird. Die Entkalkung kann bei weichem Wasser ebenso seltener durchgeführt werden, als bei hartem Wasser. Dennoch wird das Strömungsleitungssystem von Kalk frei gehalten. Die Haltbarkeit des Vorratsbehälters wird durch die zuvor genannten Maßnahmen erhöht.
Zur Umsetzung einer möglichst weitgehenden Automatisierung des Entkalkungsvorganges geht deshalb ein weiterführender Vorschlag nach der Erfindung dahin, dass der Getränkeautomat eine Zeitsteuerung zur tournusmäßigen Durchführung einer Entkalkung in Abhängigkeit von der Benutzungshäufigkeit und/oder der Häufigkeit eines Getränkebezuges aufweist. Ebenso kann auch die Dosierung des zu lösenden Entkalkungsmittels automatisiert werden. Somit übernimmt der Getränkeautomat selbstständig die Überwachung einer erforderlichen Entkalkung. Der Anwender ist von regelmäßigen Kontrollen des Zustandes des Getränkeautomaten sowie von einer manuellen Durchführung der Entkalkung gänzlich entbunden. Dies gewährleistet eine lange Lebensdauer des Gerätes und eine einwandfreie Funktion.

Zur Optimierung des Säuregehalts kann der Getränkeautomat entsprechend einer Ausgestaltung der Erfindung eine pH-Wert-Messeinrichtung oder eine Messeinrichtung zur Erfassung des elektrischen Leitwertes des Wassers aufweisen. Auf diese Weise kann die Konzentration der Säure optimal eingestellt werden, um bestmögliche Entkalkungsergebnisse zu erreichen. Darüber hinaus lässt sich diese Messwerterfassung dazu nutzen, den Füllstand des Vorratsbehälters mit Entkalkungsmittel zu bestimmen. Sinkt nämlich der Säuregrad unter ein vorgeschriebenes Mindestmaß, kann dem Anwender signalisiert werden, dass frisches Entkalkungsmittel in den Vorratsbehälter nachgefüllt werden muss. Dabei ist es von besonderem Vorteil, wenn der Vorratsbehälter in der zuvor bereits beschriebenen Weise mit einer verschließbaren Öffnung oder einem verschließbaren Deckel ausgestattet ist. Natürlich kann an dieser Stelle auch die Verwendung von Einweg-Vorratsbehältern nicht ausgeschlossen werden. In diesem Fall wird der leere Vorratsbehälter gegen einen neuen, mit Entkalkungsmitteln befüllten Vorratsbehälter ausgetauscht. Eine weitere Möglichkeit der Feststellung, wann der Vorratsbehälter neu befüllt oder ausgetauscht werden muss, besteht in einer rechnerischen Ermittlung in einer in dem Getränkeautomat vorhandenen zentralen Verarbeitungseinheit (CPU). Die Anzeige kann in an sich bekannter Weise über ein Display beziehungsweise eine andere Anzeigeeinheit erfolgen.

Ein erfindungsgemäßes Verfahren zur Anwendung einer Entkalkungsvorrichtung in einem Getränkeautomat ist durch folgende Verfahrensschritte gekennzeichnet:
- Öffnen der Dosierventile, sodass über den Wassereinlass frisches Wasser zugeführt wird, während über den Gemischauslass eine gleiche Menge Lösung in das Strömungsleitungssystem abgegeben wird,
- Einwirkung der Lösung auf das Strömungsleitungssystem,
- Abführen der Lösung über die Entnahmeeinrichtungen,
- abschließende Spülung des Strömungsleitungssystems mit Wasser.

Mit dem Verfahren wird stets nur eine exakt definierbare Menge der im Vorratsbehälter enthaltenen, gesättigten Lösung entnommen. Es ist dies nämlich genau die Menge, die gleichzeitig am Wassereinlass als Frischwasser zugeführt wird, wobei das Prinzip der Volumenverdrängung genutzt wird. Das Verfahren gestattet somit eine relativ exakte Dosierung und steigert dadurch die Effektivität der vorzunehmenden Entkalkung des Strömungsleitungssystems bei gleichzeitiger Schonung der Reserven und der Umwelt, denn letztlich muss die verbrauchte Lösung auch entsorgt werden. Die Wirkung der Lösung des Entkalkungsmittels innerhalb des Strömungsleitungssystems kann gesteigert werden, wenn die Lösung zirkuliert. Hierfür kann eine ohnehin in dem Getränkeautomaten vorhandene Pumpe zum Einsatz kommen.

Wie bereits ausgeführt wurde, ist es insbesondere beim Transport und Export einfacher, pulverförmige Entkalkungsmittel zu verwenden, als flüssige. Die erste Inbetriebnahme der Entkalkungsvorrichtung sollte daher sinnvoller Weise so ablaufen, dass vor Beginn der Entkalkung einmalig Wasser in den mit pulverförmigem Entkalkungsmittel befüllten Vorratsbehälter gefüllt wird, sodass darin eine gesättigte Lösung des Entkalkungsmittels entsteht. Im Anschluss daran wird der Vorgang kontinuierlich durch Hinzufügen frischen Wassers in den Vorratsbehälter und Abführung der gleichen Menge des Gemisches aus Entkalkungsmittel und Wasser aus dem Vorratsbehälter in der zuvor beschriebenen Weise fortgesetzt.

Im Zuge der angestrebten Automatisierung des gesamten Entkalkungsvorganges sollte in vorteilhafter Weise die Einwirkung der sauren Lösung auf das Strömungsleitungssystem zeitgesteuert, in Abhängigkeit von der Benutzungshäufigkeit und/oder der Häufigkeit eines Getränkebezuges und/oder dem Härtegrad des Wassers durchgeführt werden. Auch hierdurch wird der Anwender von Überwachungserfordernissen befreit, so dass ein größtmöglicher Komfort bereitgestellt wird.

Dementsprechend geht ein weiterführender Vorschlag der Erfindung dahin, dass der Zeitpunkt des Beginns eines Entkalkungsvorganges und/oder die Einwirkzeit in einer Steuerungseinrichtung des Getränkeautomaten vorprogrammiert oder manuell einstellbar ist. Ebenso wie der Zeitpunkt oder die Einwirkzeit vorab einstellbar sind oder manuell beeinflusst werden können, ist dies ebenso für den für die Dosierungsmenge maßgeblichen Härtegrad des Wassers möglich, der in einer Steuerungseinrichtung des Getränkeautomaten vorprogrammiert und/oder manuell eingestellt werden kann.

Die Erfindung wird nachfolgend anhand der beigefügten Zeichnungen näher erläutert. Die dargestellten Ausführungsbeispiele stellen keine Einschränkung auf die dargestellten Varianten dar, sondern dienen lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind. Es zeigt:
- Figur 1:: eine Frontansicht eines Getränkeautomaten mit einer Entkalkungsvorrichtung,
- Figur 2:: eine schematisch stark vereinfachte Darstellung eines Vorratsbehälters als Einzelteildarstellung,
- Figur 3:: eine erste Variante eines Teils eines Flussbildes eines Strömungsleitungssystems in einem Getränkeautomaten in vereinfachter Darstellung
- und Figur 4:: eine zweite Variante eines Teils eines Flussbildes eines Strömungsleitungssystems in einem Getränkeautomaten in vereinfachter Darstellung.

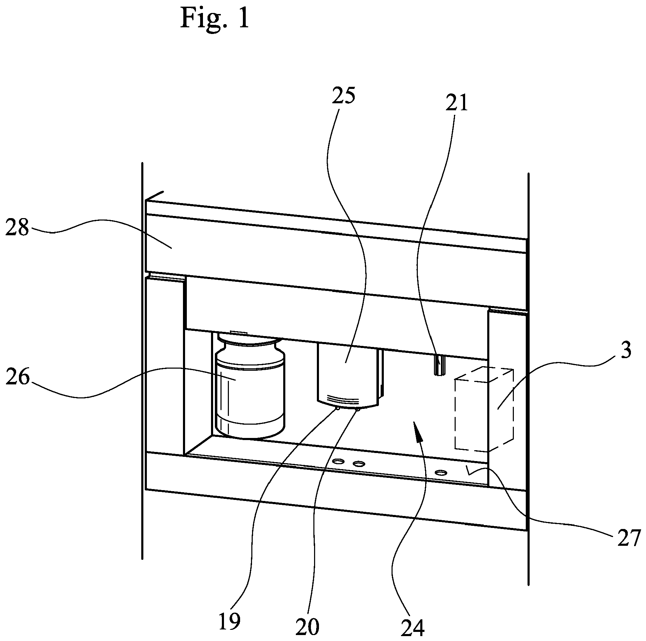

Figur 1 zeigt die Frontansicht eines eine Entkalkungsvorrichtung aufweisenden Getränkeautomaten am Beispiel eines in einen Küchenschrank eingesetzten und zur Zubereitung von Kaffeegetränken beziehungsweise Kaffeemischgetränken dienenden Kaffeeautomaten.

Die durch eine Blende 28 gebildete Front des Getränkeautomaten weist zunächst eine Mulde 24 auf, in der sich mehrere Entnahmeeinrichtungen 19, 20, 21 befinden. Eine in ihrer Höhe verstellbare Ausgabeeinheit 25 weist in ihrem unteren Bereich zwei Entnahmeeinrichtungen 19, 20 für die Abgabe von Kaffeegetränken auf. Die Entnahmeeinrichtung 21 ist in diesem Fall eine Düse, die zur Abgabe von Wasserdampf verwendet wird. Seitlich neben den Entnahmeeinrichtungen 19-21 ist ein Flüssigkeitsbehälter 26 in die Mulde 24 eingehängt, aus dem beispielsweise Milch entnommen werden kann, um Kaffeemischgetränke herzustellen oder heiße Milch beziehungsweise Kakaogetränke zu erzeugen. Die untere Begrenzung der Mulde 24 wird durch eine Abtropfplatte 27 gebildet, die die von den Entnahmeeinrichtung 19-21 abtropfenden Reste in einen unterhalb der Abtropfplatte 27 vorhandenen Auffangbehälter abführt. Hierzu sind in die Abtropfplatte 27 mehrere Öffnungen eingebracht. Verdeckt durch die Blende 28 befindet sich im Geräteinneren ein durch gestrichelte Linien in der Figur 1 nur angedeuteter Vorratsbehälter 3 mit einem Entkalkungsmittel, auf dessen Aufbau und Funktionsweise nachfolgend noch näher eingegangen wird.

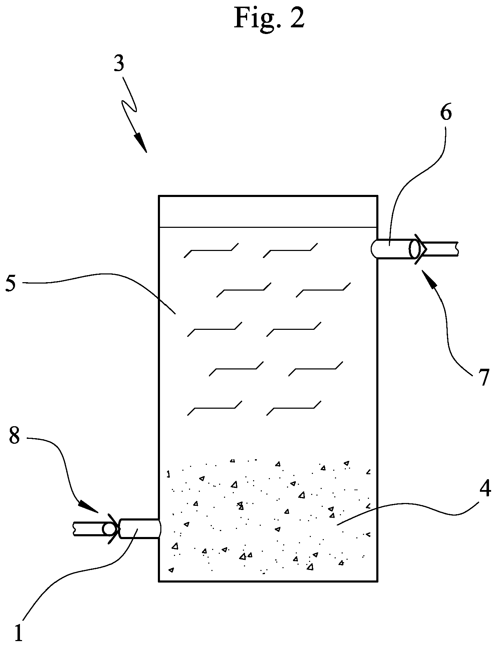

So zeigt die Figur 2 einen derartigen Vorratsbehälter 3 in einer stark vereinfachten Einzelteildarstellung. Der Vorratsbehälter 3 weist einen Wassereinlass 1 auf, über den Wasser in den Vorratsbehälter 3 eingebracht werden kann. Im Bereich des Wassereinlasses 1 ist ferner ein Dosierventil 8 vorhanden, über das die Menge des zugeführten Wassers reguliert wird. Der Wassereinlass 1 befindet sich im unteren, bodennahen Bereich des Vorratsbehälters 3. Oberhalb des Wassereinlasses 1 ist ein Gemischauslass 6 mit einem Dosierventil 7 angeordnet, über das die Menge des abgeführten Gemisches aus Wasser und Entkalkungsmittel 4 regulierbar ist. Der Vorratsbehälter 3 ist mit einem pulverförmigen Entkalkungsmittel 4 gefüllt. Durch die Einbringung von Wasser über den Wassereinlass 1 im bodennahen Bereich des Vorratsbehälters 3 wird das pulverförmige Entkalkungsmittel 4 von dem Wasser durchströmt und dabei verwirbelt, wodurch ein Teil des Entkalkungsmittels 4 in Lösung übergeht und oberhalb des verbleibenden Restes des Entkalkungsmittels 4 eine gesättigte Lösung 5 bildet, die der Entkalkung eines Strömungsleitungssystems für Fluide dient.

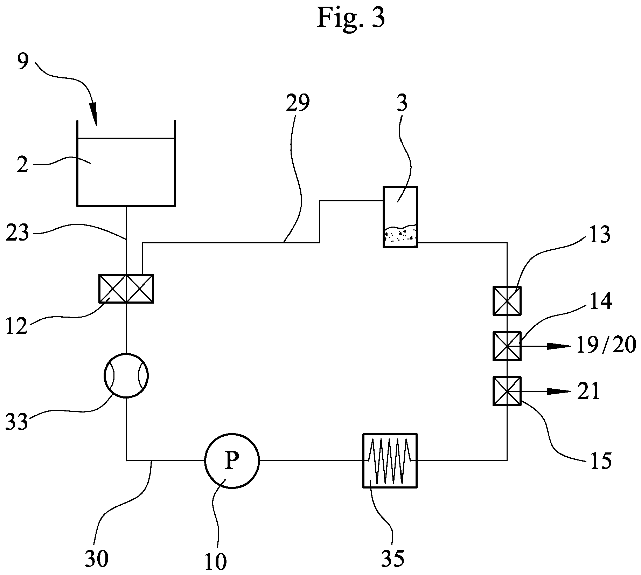

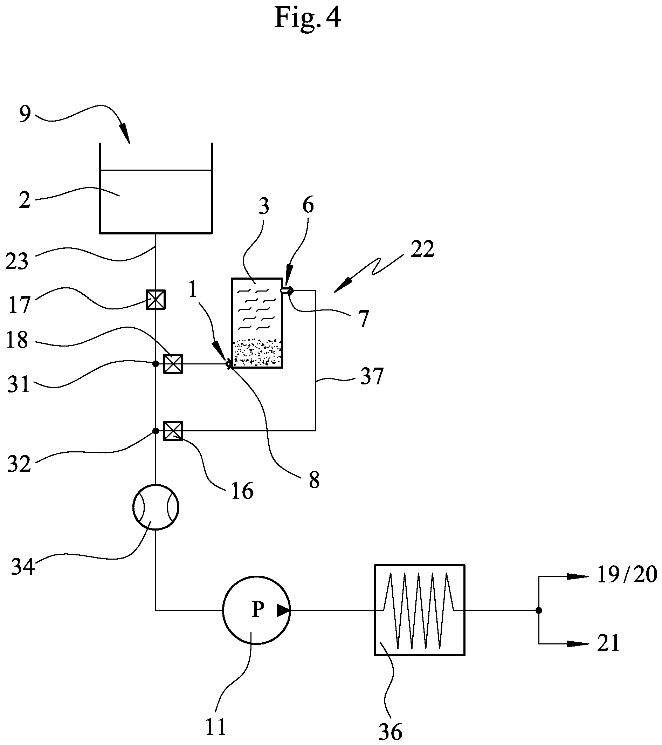

In den Figuren 3 und 4 sind zwei verschiedene Varianten eines Teils eines Flussbildes eines Strömungsleitungssystems in einem Getränkeautomaten in vereinfachter Darstellung gezeigt. Die Figur 3 veranschaulicht zunächst ein Flussbild, in dem die Entkalkungsvorrichtung zur Entkalkung des Strömungsleitungssystems zwischen einem Wasserbehälter 9 und mehreren Entnahmeeinrichtungen 19, 20, 21 angeordnet ist. In dem Wasserbehälter 9 befindet sich frisches Wasser 2. Der Wasserbehälter 9 ist über eine Wasserleitung 23 an das Strömungsleitungssystems angeschlossen, wobei die Wasserleitung 23 in ein Mehrwegeventil 12 mündet, welches das Leitungssystem zur Aufbereitung der Getränke von dem Leitungssystem zur Entkalkung trennt.
In einer ersten Stellung lässt dieses Mehrwegeventil 12 frisches Wasser unmittelbar in das Leitungssystem zur Aufbereitung der Getränke, während der Entkalkungsabschnitt des Strömungsleitungssystems verschlossen ist. Neben dem in dieser Richtung verschlossenen Mehrwegeventil 12 ist am Ende des Leitungssystems zur Entkalkung ein zweites Ventil 13 vorhanden, das in dieser Schaltstellung des Mehrwegeventils 12 ebenfalls verschlossen ist. Die Ventile 14, 15 aufweisenden Entnahmeeinrichtungen 19, 20, 21 sind hingegen geöffnet und können genutzt werden, um ein Getränk zuzubereiten. Zur Unterstützung der Strömungsführung ist in das Leitungssystem zur Aufbereitung der Getränke ferner eine Pumpe 10 integriert, die das aus dem Wasserbehälter 9 entnommene Wasser 2 über eine Wasserleitung 30 zu einem Wärmetauscher beziehungsweise Thermoblock 35 zur Erwärmung des Wassers fördert. Darüber hinaus weist dieser Abschnitt des Strömungsleitungssystems ein Durchflussmessgerät 33 in Form eines Flowmeters auf.
Eine zweite Stellung des Mehrwegeventils 12 führt dazu, dass frisches Wasser 2 aus dem Wasserbehälter 9 in das Leitungssystem zur Entkalkung und damit in die Wasserleitung 29 gelangt. Dies hat zur Folge, dass über den Wassereinlass 1 des Vorratsbehälters 3 Wasser 2 in den Vorratsbehälter 3 fließt und das darin vorhandene Entkalkungsmittel 4 löst. In gleichem Maße, wie frisches Wasser 2 in den Vorratsbehälter 3 eingebracht wird, wird nach dem Prinzip der Volumenverdrängung ebenfalls in dem Vorratsbehälter 3 vorhandene Lösung 5 über den Gemischauslass 6 abgeführt und in das Strömungsleitungssystem eingebracht, wo es über das geöffnete Ventil 13 zu den Ventilen 14 und 15 der Entnahmeeinrichtung in 19, 20, 21 gelangt, so dass auch diese Aggregate mit dem Entkalkungsmittel in Kontakt kommen und entkalkt werden. Nachdem ein Lösungsaustritt an den Entnahmeeinrichtungen 19, 20, 21 zu verzeichnen ist, werden die Ventile 14 und 15 geschlossen, damit die Lösung 5 des Entkalkungsmittels 4 seine Wirkung entfalten kann. Je nach Intensität der Nutzung und in Abhängigkeit vom Kalkgehalt des Wassers kann die Einwirkzeit 1 Stunde oder länger betragen. In dieser Zeit ist ein Getränkebezug nicht möglich, weshalb der Getränkeautomat gesperrt ist und die Lösung 5 des Entkalkungsmittels 4 in den Strömungsleitungen verbleibt beziehungsweise zirkuliert. Während dieses Entkalkungsvorganges ist das Mehrwegeventil 12 in Richtung des Wassertankes 9 geschlossen, so dass keine Lösung 5 des Entkalkungsmittels 4 in den Wassertank 9 beziehungsweise in das frische Wasser 2 gelangen kann. Im Anschluss an den Entkalkungsvorgang wird das gesamte Strömungsleitungssystem noch einmal mit frischem Wasser gespült, so dass es auch gereinigt ist.

Das in der Figur 4 gezeigte Flussbild weist ein zu der Darstellung in Figur 3 analoges Leitungssystem zur Aufbereitung der Getränke auf. Auch hierbei dient eine Pumpe 11 zur Förderung des frischen Wassers 2 aus dem Wasserbehälter 9 in das Leitungssystem. Ein Durchflussmessgerät in Form eines Flowmeters 34 sowie ein Wärmetauscher 36 machen insgesamt den identischen Aufbau dieses Teils des Strömungsleitungssystems aus. Zwei Entnahmeeinrichtungen 19, 20 dienen hierbei der Abgabe eines Kaffeegetränkes, während die Entnahmeeinrichtung 21 zur Zubereitung von heißem Wasserdampf genutzt werden kann. Im Unterschied zu der Darstellung in Figur 3 wurde bei dieser Ausführungsvariante in die Wasserleitung 23 ein Bypass 22 integriert, der ausgehend von einem Abzweig 31 bis zu einem Abzweig 32 verläuft. Hinter dem Abzweig 31 ist ein Ventil 18 angeordnet, während vor dem Abzweig 32 ein weiteres Ventil 16 vorhanden ist, so dass der Bypass 22 insgesamt von dem Wasser führenden Teil der Wasserleitung 23 getrennt beziehungsweise mit diesem Teil der Wasserleitung verbunden werden kann. In den Bypass ist der Vorratsbehälter 3 integriert, der auf diese Weise bei geöffnetem Ventil 18 mit frischem Wasser 2 versorgt wird, so dass das darin enthaltene Entkalkungsmittel 4 in eine Lösung 5 übergeht und die dem zugeführten Wasser 2 entsprechende Menge Lösung 5 des Entkalkungsmittels 4 über den Gemischauslass 6 und die Speisungsleitung 37 abgeführt wird. Das ebenfalls geöffnete Ventil 16 ermöglicht die Einspeisung der Lösung 5 des Entkalkungsmittels 4 über den Abzweig 32 in das Strömungsleitungssystem. Damit kann in der zuvor beschriebenen Weise der Entkalkungsvorgang eingeleitet werden. Ein Absperrventil 17 in der Wasserleitung 23 dient dazu, ein Eindringen der Lösung 5 des Entkalkungsmittels 4 in den Wassertank 9 zu verhindern.

### BEZUGSZEICHENLISTE:

- 1: Wassereinlass
- 2: Wasser/Frischwasser
- 3: Vorratsbehälter
- 4: Entkalkungsmittel
- 5: Lösung/Säure
- 6: Gemischauslass
- 7: Dosierventil
- 8: Dosierventil
- 9: Wasserbehälter
- 10: Pumpe
- 11: Pumpe
- 12: Mehrwegeventil
- 13: Absperrventil
- 14: Ventil
- 15: Ventil
- 16: Ventil
- 17: Absperrventil
- 18: Ventil
- 19: Entnahmeeinrichtung
- 20: Entnahmeeinrichtung
- 21: Entnahmeeinrichtung
- 22: Bypass
- 23: Wasserleitung
- 24: Mulde
- 25: Ausgabeeinheit
- 26: Flüssigkeitsbehälter
- 27: Abtropfplatte
- 28: Blende
- 29: Wasserleitung
- 30: Wasserleitung
- 31: Abzweig
- 32: Abzweig
- 33: Durchflussmessgerät (Flowmeter)
- 34: Durchflussmessgerät (Flowmeter)
- 35: Wärmetauscher (Thermoblock)
- 36: Wärmetauscher (Thermoblock)
- 37: Speisungsleitung

## Patentansprüche

1. Entkalkungsvorrichtung zur Entkalkung eines Strömungsleitungssystems für Fluide, umfassend einen über einen Wassereinlass (1) mit Wasser (2) beaufschlagbaren Vorratsbehälter (3) mit einem darin enthaltenen wasserlöslichen Entkalkungsmittel (4), dessen Lösung (5) über einen Gemischauslass (6) des Vorratsbehälters (3) abführbar ist, **dadurch gekennzeichnet, dass**
in dem mit Wasser (2) aufgefüllten Vorratsbehälter (3) eine sich ausbildende gesättigte Lösung (5) des ursprünglich pulverförmigen oder pastösen Entkalkungsmittels (4) gegeben ist, wobei der Vorratsbehälter (3) über einen bodennahen Wassereinlass (1) und einen oberhalb des Wassereinlasses (1) angeordneten Gemischauslass (6) verfügt, denen jeweils mindestens ein Dosierventil (7, 8) zugeordnet ist.

2. Entkalkungsvorrichtung nach Anspruch 1,
**dadurch gekennzeichnet, dass**
der Gemischauslass (6) des Vorratsbehälters (3) mit einem Höhenversatz oberhalb des Wassereinlasses (1) am Vorratsbehälter (3) angeordnet ist und dass durch die damit gegebene Strömungsführung innerhalb des Vorratsbehälters (3) eine sich ausbildende gesättigte Lösung (5) des ursprünglich pulverförmigen oder pastösen Entkalkungsmittels (4) gegeben ist.

3. Entkalkungsvorrichtung nach einem der vorstehend genannten Ansprüche, **dadurch gekennzeichnet, dass**
der Vorratsbehälter (3) eine verschließbare Öffnung zum Nachfüllen verbrauchten Entkalkungsmittels (4) aufweist.

4. Entkalkungsvorrichtung nach einem der vorstehend genannten Ansprüche, **dadurch gekennzeichnet, dass**
das Entkalkungsmittel (4) pulverförmig oder in Tablettenform gepresst ist und zusammen mit Wasser (2) eine Säure bildende Eigenschaft aufweist.

5. Entkalkungsvorrichtung nach einem der vorstehend genannten Ansprüche, **dadurch gekennzeichnet, dass**
das Entkalkungsmittel (4) Zitronensäure, Essigsäure oder eine andere, biologisch abbaubare Säure ist.

6. Getränkeautomat mit einer Entkalkungsvorrichtung nach einem der vorstehend genannten Ansprüche,
**dadurch gekennzeichnet, dass**
der Getränkeautomat ein Strömungsleitungssystem für Fluide mit mindestens einem Wasser (2) enthaltenden Wasserbehälter (9) oder Wasseranschluss, wenigstens einer Pumpe (10, 11), mindestens einem Ventil (12, 13, 14, 15, 16, 17, 18) und wenigstens einer Entnahmeeinrichtung (19, 20, 21) aufweist, wobei die Entkalkungsvorrichtung zur Entkalkung des Strömungsleitungssystems zwischen Wasserbehälter (9) und Entnahmeeinrichtung (19, 20, 21) angeordnet ist.

7. Getränkeautomat mit einer Entkalkungsvorrichtung nach einem der Ansprüche 1 bis 5 **dadurch gekennzeichnet, dass**
der Getränkeautomat ein Strömungsleitungssystem für Fluide mit mindestens einem Wasser (2) enthaltenden Wasserbehälter (9), wenigstens einer Pumpe (10, 11), mindestens einem Ventil (12, 13, 14, 15, 16, 17, 18) und wenigstens einer Entnahmeeinrichtung (19, 20, 21) aufweist, wobei die Entkalkungsvorrichtung zur Entkalkung des Strömungsleitungssystems als Bypass (22) in die Wasserleitung (23) des Wasserbehälters (9) integriert ist.

8. Getränkeautomat nach Anspruch 6 oder 7, **dadurch gekennzeichnet, dass**
der Getränkeautomat eine Zeitsteuerung zur turnusmäßigen Durchführung einer Entkalkung in Abhängigkeit von der Benutzungshäufigkeit und/oder der Häufigkeit eines Getränkebezuges aufweist.

9. Getränkeautomat nach einem der Ansprüche 6 bis 8, **dadurch gekennzeichnet, dass**
der Getränkeautomat eine pH-Wert-Messeinrichtung oder eine Messeinrichtung zur Erfassung des elektrischen Leitwertes des Wassers (2) aufweist.

10. Verfahren zur Anwendung einer Entkalkungsvorrichtung in einem Getränkeautomat nach einem der Ansprüche 6 bis 9, **gekennzeichnet durch** folgende Verfahrensschritte:
- Öffnen der Dosierventile (7, 8), sodass über den Wassereinlass (1) frisches Wasser (2) zugeführt wird, während über den Gemischauslass (6) eine gleiche Menge Lösung (5) in das Strömungsleitungssystem abgegeben wird,
- Einwirkung der Lösung (5) auf das Strömungsleitungssystem,
- Abführen der Lösung (5) über die Entnahmeeinrichtungen (19, 20, 21),
- abschließende Spülung des Strömungsleitungssystems mit Wasser (2).

11. Verfahren nach Anspruch 10, **dadurch gekennzeichnet, dass**
vor Beginn der Entkalkung einmalig Wasser (2) in den mit pulverförmigem Entkalkungsmittel (4) befüllten Vorratsbehälter (3) gefüllt wird, sodass darin eine gesättigte Lösung (5) des Entkalkungsmittels (4) entsteht.

12. Verfahren nach Anspruch 10 oder 11, **dadurch gekennzeichnet, dass**
die Einwirkung der sauren Lösung (5) auf das Strömungsleitungssystem zeitgesteuert, in Abhängigkeit von der Benutzungshäufigkeit und/oder der Häufigkeit eines Getränkebezuges und/oder dem Härtegrad des Wassers durchgeführt wird.

13. Verfahren nach einem der Ansprüche 10 bis 12, **dadurch gekennzeichnet, dass**
der Zeitpunkt des Beginns eines Entkalkungsvorganges und/oder die Einwirkzeit und/oder der Härtegrad des Wassers in einer Steuerungseinrichtung des Getränkeautomaten vorprogrammiert oder manuell einstellbar ist.

14. Verfahren nach einem der Ansprüche 10 bis 13, **dadurch gekennzeichnet, dass**
der für die Dosierungsmenge maßgebliche Härtegrad des Wassers in einer Steuerungseinrichtung des Getränkeautomaten vorprogrammiert und/oder manuell einstellbar ist.

## Claims

1. Descaling device for descaling a flow-line system for fluids, comprising a storage container (3), to which water (2) can be supplied via a water inlet (1) and which comprises a water-soluble descaling agent (4) contained therein, the solution (5) of which agent can be discharged via a mixture outlet (6) of the storage container (3), **characterised in that** a forming saturated solution (5) of the originally powdered or pasty descaling agent (4) is produced in the storage container (3) filled with water (2), the storage container (3) comprising a water inlet (1) near the base and a mixture outlet (6) arranged above the water inlet (1), with which inlet and outlet at least one metering valve (7, 8) is associated in each case.

2. Descaling device according to claim 1,
**characterised in that**
the mixture outlet (6) of the storage container (3) is arranged on the storage container (3) so as to be vertically offset above the water inlet (1) and **in that** the flow guidance thus provided inside the storage container (3) produces a forming saturated solution (5) of the originally powdered or pasty descaling agent (4).

3. Descaling device according to any of the preceding claims,
**characterised in that**
the storage container (3) comprises a closable opening for replenishing used-up descaling agent (4).

4. Descaling device according to any of the preceding claims,
**characterised in that**
the descaling agent (4) is pressed so as to be powdered or in tablet form and has, together with water (2), an acid-forming property.

5. Descaling device according to any of the preceding claims, **characterised in that** the descaling agent (4) is citric acid, acetic acid or another biodegradable acid.

6. Drinks machine comprising a descaling device according to any of the preceding claims,
**characterised in that**
the drinks machine comprises a flow-line system for fluids comprising at least one water container (9) or water supply element that contains water (2), at least one pump (10, 11), at least one valve (12, 13, 14, 15, 16, 17, 18), and at least one discharging means (19, 20, 21), the descaling device for descaling the flow-line system being arranged between the water container (9) and the discharging means (19, 20, 21).

7. Drinks machine comprising a descaling device according to any of claims 1 to 5,
**characterised in that**
the drinks machine comprises a flow-line system for fluids comprising at least one water container (9) that contains water (2), at least one pump (10, 11), at least one valve (12, 13, 14, 15, 16, 17, 18) and at least one discharging means (19, 20, 21), the descaling device for descaling the flow-line system being integrated in the water line (23) of the water container (9) as a bypass (22).

8. Drinks machine according to either claim 6 or claim 7,
**characterised in that**
the drinks machine comprises a timer for carrying out a descaling process in rotation based on the frequency of use and/or the frequency of drink withdrawal.

9. Drinks machine according to any of claims 6 to 8,
**characterised in that**
the drinks machine comprises a pH measuring means or a measuring means for detecting the electrical conductance of the water (2).

10. Method for using a descaling device in a drinks machine according to any of claims 6 to 9,
**characterised by** the following method steps:
- opening the metering valves (7, 8) so that fresh water (2) is supplied via the water inlet (1), while an equal amount of solution (5) is delivered into the flow-line system via the mixture outlet (6),
- action of the solution (5) on the flow-line system,
- discharging the solution (5) via the discharging means (19, 20, 21),
- finally, rinsing the flow-line system with water (2).

11. Method according to claim 10,
**characterised in that**
before descaling begins, water (2) is filled once into the storage container (3), which is filled with powdered descaling agent (4), such that a saturated solution (5) of the descaling agent (4) is produced in said storage container.

12. Method according to either claim 10 or claim 11,
**characterised in that**
the action of the acidic solution (5) on the flow-line system is carried out in a timed manner and based on the frequency of use and/or the frequency of drink withdrawal and/or the degree of hardness of the water.

13. Method according to any of claims 10 to 12,
**characterised in that**
the time at which a descaling process begins and/or the contact time and/or the degree of hardness of the water is pre-programmed or can be manually set in a control means of the drinks machine.

14. Method according to any of claims 10 to 13,
**characterised in that**
the degree of hardness of the water that is relevant for the metering amount is pre-programmed and/or can be manually set in a control means of the drinks machine.

## Revendications

1. Dispositif de détartrage destiné au détartrage d'un système de conduites d'écoulement pour fluides, comprenant un réservoir (3) pouvant être alimenté en eau (2) par le biais d'une entrée d'eau (1) avec un produit détartrant (4) soluble à l'eau qui y est contenu, dont la solution (5) peut être évacuée par le biais d'une sortie de mélange (6) du réservoir (3),
**caractérisé en ce que**,
dans le réservoir (3) rempli d'eau (2), il y a une solution (5) saturée en formation du produit détartrant (4) initialement pulvérulent ou pâteux, dans lequel le réservoir (3) dispose d'une entrée d'eau (1) proche du fond et d'une sortie de mélange (6) disposée au-dessus de l'entrée d'eau (1) auxquelles respectivement est affectée au moins une vanne de dosage (7, 8).

2. Dispositif de détartrage selon la revendication 1,
**caractérisé en ce que**
la sortie de mélange (6) du réservoir (3) est disposée sur le réservoir (3) avec un décalage en hauteur au-dessus de l'entrée d'eau (1), et **en ce que**, du fait du guidage d'écoulement ainsi réalisé à l'intérieur du réservoir (3), il y a une solution (5) saturée en formation du produit détartrant (4) initialement pulvérulent ou pâteux.

3. Dispositif de détartrage selon l'une des revendications citées précédemment,
**caractérisé en ce que**
le réservoir (3) présente une ouverture pouvant être fermée pour le remplacement du produit détartrant (4) consommé.

4. Dispositif de détartrage selon l'une des revendications citées précédemment,
**caractérisé en ce que**
le produit détartrant (4) est pulvérulent ou pressé en forme de comprimés et présente, conjointement avec de l'eau (2), une caractéristique formant un acide.

5. Dispositif de détartrage selon l'une des revendications citées précédemment,
**caractérisé en ce que**
le produit détartrant (4) est de l'acide citrique, de l'acide acétique ou un autre acide biodégradable.

6. Appareil de préparation de boissons avec un dispositif de détartrage selon l'une des revendications citées précédemment,
**caractérisé en ce que**
l'appareil de préparation de boissons présente un système de conduites d'écoulement pour fluides avec au moins un récipient d'eau (9) ou raccordement d'eau contenant de l'eau (2), au moins une pompe (10, 11), au moins une vanne (12, 13, 14, 15, 16, 17, 18) et au moins un dispositif de soutirage (19, 20, 21), dans lequel le dispositif de détartrage destiné au détartrage du système de conduites d'écoulement est disposé entre le récipient d'eau (9) et le dispositif de soutirage (19, 20, 21).

7. Dispositif de détartrage selon l'une des revendications 1 à 5,
**caractérisé en ce que**
l'appareil de préparation de boissons présente un système de conduites d'écoulement pour fluides avec au moins un récipient d'eau (9) contenant de l'eau (2), au moins une pompe (10, 11), au moins une vanne (12, 13, 14, 15, 16, 17, 18) et au moins un dispositif de soutirage (19, 20, 21), dans lequel le dispositif de détartrage destiné au détartrage du système de conduites d'écoulement est intégré en tant que dérivation (22) dans la conduite d'eau (23) du récipient d'eau (9).

8. Dispositif de détartrage selon la revendication 6 ou 7,
**caractérisé en ce que**
l'appareil de préparation de boissons présente une commande par synchronisation pour la réalisation périodique d'un détartrage en fonction de la fréquence d'utilisation et/ou de la fréquence d'une consommation de boisson.

9. Dispositif de détartrage selon l'une des revendications 6 à 8,
**caractérisé en ce que**
l'appareil de préparation de boissons présente un système de mesure du pH ou un système de mesure destiné à détecter la conductance électrique de l'eau (2).

10. Procédé d'utilisation d'un dispositif de détartrage dans un appareil de préparation de boissons selon l'une des revendications 6 à 9,
**caractérisé par** les étapes de procédé suivantes :
- ouverture des vannes de dosage (7, 8) de telle sorte que de l'eau (2) fraîche est acheminée par le biais de l'entrée d'eau (1) pendant que, par le biais de la sortie de mélange (6), une quantité identique de solution (5) est délivrée dans le système de conduites d'écoulement,
- action de la solution (5) sur le système de conduites d'écoulement,
- évacuation de la solution (5) par le biais des dispositifs de soutirage (19, 20, 21),
- rinçage terminal du système de conduites d'écoulement avec de l'eau (2).

11. Procédé selon la revendication 10,
**caractérisé en ce que**,
avant le début du détartrage, de l'eau (2) est remplie une seule fois dans le réservoir (3) rempli du produit détartrant (4) pulvérulent de telle sorte qu'une solution (5) saturée du produit détartrant (4) est créée dans le réservoir.

12. Procédé selon la revendication 10 ou 11,
**caractérisé en ce que**
l'action de la solution (5) acide sur le système de conduites d'écoulement est réalisée de façon commandée par synchronisation en fonction de la fréquence d'utilisation et/ou de la fréquence d'une consommation de boisson et/ou en fonction du degré de dureté de l'eau.

13. Procédé selon l'une des revendications 10 à 12,
**caractérisé en ce que**
le moment du début d'un processus de détartrage et/ou la durée d'action et/ou le degré de dureté de l'eau est préprogrammé(e) ou réglable manuellement dans un système de commande de l'appareil de préparation de boissons.

14. Procédé selon l'une des revendications 10 à 13,
**caractérisé en ce que**
le degré de dureté de l'eau déterminant pour la quantité de dosage est préprogrammé et/ou réglable manuellement dans un système de commande de l'appareil de préparation de boissons.
